# FASCICULE DE BREVET EUROPEEN

(11) **EP 0 621 154 B1**
(45) Date de publication et mention de la délivrance du brevet: **30.10.1996**
(21) Numéro de dépôt: 94400784.8
(22) Date de dépôt: 12.04.1994
(51) Int. Cl.: B60K 15/05

(54) **Agencement pour l'obturation d'une canalisation de remplissage d'un réservoir de carburant de véhicule automobile**
Anordnung für den Verschluss eines Einfüllstutzens eines Kraftfahrzeugbrennstofftanks
Arrangement for the inlet cover of a fuel tank of a motor vehicle

(30) Priorité: 22.04.1993 FR 9304742
(43) Date de publication de la demande: 26.10.1994
(73) Titulaire: PAUL JOURNEE S.A., F-92700 Colombes (FR)
(72) Inventeur: Crepin, Christophe, F-95300 Pontoise (FR); Romanek, Christiona, F-60430 Noailles (FR)
(74) Mandataire: Lemaire, Marc

(56) Documents cités:
- EP-A- 0 096 604
- EP-A- 0 545 813
- BE-A- 523 095

## Description

La présente invention concerne un agencement pour l'obturation d'une canalisation de remplissage d'un réservoir de véhicule automobile.

L'invention concerne plus particulièrement un agencement pour l'obturation et le masquage de l'extrémité de la canalisation de remplissage du réservoir de carburant d'un véhicule automobile qui est agencée dans une cavité de la carrosserie, du type comportant un volet, également appelé volet de trappe, qui est monté mobile entre une position ouverte dégageant l'accès à l'extrémité de la conduite de remplissage et une position fermée dans laquelle le volet masque la face ouverte de la cavité, qui porte sur sa face interne un bouchon d'obturation de l'extrémité de la conduite de remplissage et qui comporte des moyens de verrouillage en position fermée du volet.

Un tel agencement dans lequel le bouchon d'obturation est relié au volet de trappe, ce dernier étant par exemple articulé par rapport à la carrosserie autour d'un axe de pivotement sensiblement parallèle au plan du volet, est particulièrement simple à utiliser dans la mesure où une seule opération de commande de déverrouillage et d'ouverture, et inversement de fermeture et de verrouillage, permet d'accéder directement à l'extrémité libre ouverte de la conduite de remplissage, le bouchon restant lié au volet lorsque ce dernier est dans sa position ouverte.

Cet agencement présente toutefois certains inconvénients.

Premièrement, en cas d'accident ou de choc important, le bouchon lié au volet de trappe peut être arraché de l'extrémité de la conduite de remplissage de carburant. Ce dernier pouvant alors se déverser par cette extrémité.

Deuxièmement, une tentative d'effraction en vue de provoquer l'ouverture du volet aboutit simultanément, en cas de succès, à l'ouverture du bouchon qui est lié au volet.

Afin de remédier à ces inconvénients, l'invention propose un agencement du type mentionné précédemment, caractérisé en ce qu'il comporte des moyens débrayables de liaison du bouchon avec le volet qui sont désaccouplés lorsque le volet est en position fermée et verrouillée et dont l'accouplement est commandé par le déverrouillage du volet.

Selon d'autres caractéristiques de l'invention :
- le bouchon est monté mobile en rotation par rapport au volet entre une position d'obturation de l'extrémité de la canalisation et une position d'ouverture, la rotation du bouchon étant commandée par l'actionnement desdits moyens de verrouillage, et les moyens débrayables de liaison du bouchon avec le volet sont des moyens de liaison par coopération de formes qui sont désaccouplés lorsque le bouchon est en position d'obturation et qui sont accouplés lorsque le bouchon est en position d'ouverture ;
- les moyens de verrouillage comportent un organe rotatif de commande qui est lié en rotation au corps du bouchon, qui commande le déplacement d'un organe de verrouillage du volet monté mobile par rapport à ce dernier, et dont une extrémité passe à travers le volet pour être accessible depuis la face externe du volet ;
- l'organe rotatif de commande est un verrou de commande ;
- ladite extrémité de l'organe rotatif de commande est montée à rotation et coulissante dans un manchon de guidage formé dans le volet ;
- les moyens de liaison par coopération de formes comportent au moins un bras radial de liaison lié en rotation audit organe rotatif de commande par rapport auquel il s'étend radialement et dont l'extrémité est susceptible de coopérer avec une partie formée sur la face interne du volet, lorsque le bouchon occupe sa position d'ouverture ;
- l'extrémité du bras comporte une mortaise circulaire qui est susceptible de recevoir un tenon complémentaire formé sur la face interne du volet ;
- les moyens de liaison comportent deux bras radiaux diamétralement opposés et la face interne du volet comporte deux tenons complémentaires diamétralement opposés ;
- l'organe de verrouillage est un pène de verrouillage qui est monté mobile en translation sur le volet, selon une direction parallèle au plan du volet, entre une position de verrouillage dans laquelle il est reçu dans une gâche formée dans la paroi de la cavité et une position de déverrouillage du volet ;
- le pène comporte un doigt de commande qui est reçu dans une rainure formant came de commande agencée dans un élément lié en rotation à l'organe rotatif de commande ;
- la rainure est formée dans une face d'un bras de liaison tournée vers le volet ;
- l'agencement comporte des moyens de blocage en position accouplée des moyens débrayables de liaison, lorsque le volet est en position ouverte ;
- les moyens de blocage comportent un organe de blocage qui coopère avec le pène de verrouillage pour bloquer ce dernier en position de verrouillage lorsque le volet est ouvert ;
- l'organe de blocage est un levier de blocage monté pivotant sur le volet dont une première extrémité est sollicitée en direction d'une encoche de blocage formée dans le corps du pène de verrouillage et dans laquelle elle est reçue lorsque le péne est en position déverrouillée, et dont la seconde extrémité est susceptible de coopérer avec une butée de libération, formée dans la cavité, lorsque le volet est en position fermée pour provoquer l'échappement de la première extrémité hors de l'encoche de blocage à l'encontre de l'effort élastique de rappel ;
- le bouchon comporte des moyens d'accrochage qui coopèrent avec des moyens complémentaires agencés à l'extrémité de la conduite de remplissage pour immobiliser axialement le bouchon par rapport à la conduite lorsqu'il occupe sa position d'obturation ; et
- le volet est monté articulé sur la carrosserie autour d'un axe de pivotement sensiblement parallèle au plan du volet.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section selon la ligne 1-1 de la figure 2 d'un exemple de réalisation d'un agencement conforme aux enseignements de l'invention sur laquelle le volet est illustré en position fermée et verrouillée ;
- la figure 2 est une vue en section partielle selon la ligne 2-2 de la figure 1 ;
- la figure 3 est une vue similaire à celle de la figure 1 sur laquelle le volet est illustré en position ouverte ; et
- la figure 4 est une vue en perspective à plus grande échelle illustrant les principaux composants, dont certains en section par un plan passant par la ligne 1-1 de la figure 2, de l'agencement illustré aux figures 1 et 2.

On a illustré sur les figures une portion de la carrosserie 10 d'un véhicule automobile dans laquelle est agencé un boîtier rapporté 12 qui délimite une cavité 14 de contour général rectangulaire dont la face ouverte supérieure 16 est masquée par un volet 18.

On a également représenté sur les figures un tronçon 20 d'une conduite de remplissage d'un réservoir de carburant (non représenté) dont l'extrémité de remplissage 22 s'étend à l'intérieur de la cavité 14 et est accessible par la face ouverte 16 lorsque le volet 18 est en position ouverte.

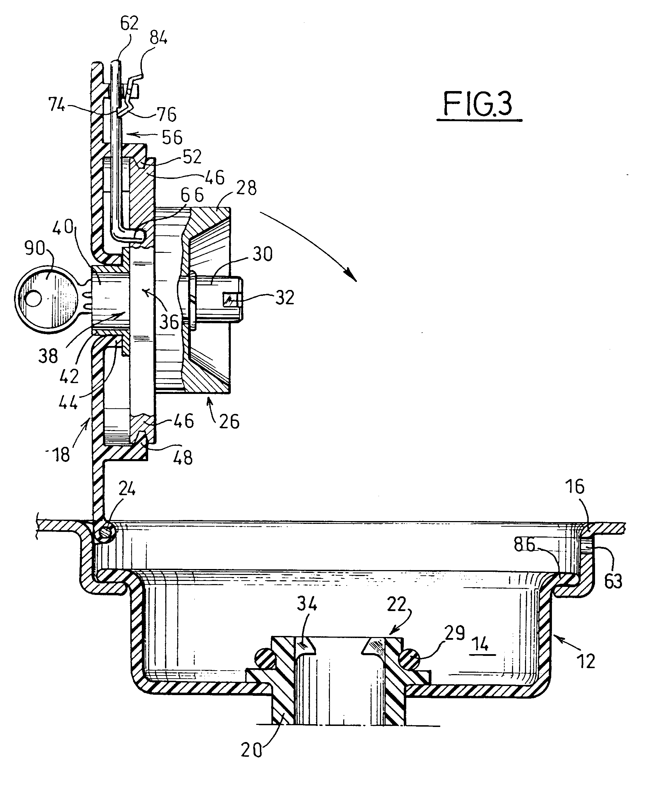

A cet effet, le volet 18 est monté articulé sur la carrosserie 10 autour d'un axe de pivotement 24 qui s'étend dans un plan parallèle au plan général du volet 18 de manière que ce dernier puisse pivoter, entre sa position fermée illustrée et sa position ouverte illustrée à la figure 3, d'un angle de pivotement sensiblement égal à 90°.

Outre le volet 18, l'agencement d'obturation de l'extrémité 22 de la conduite 20 comporte un bouchon 26.

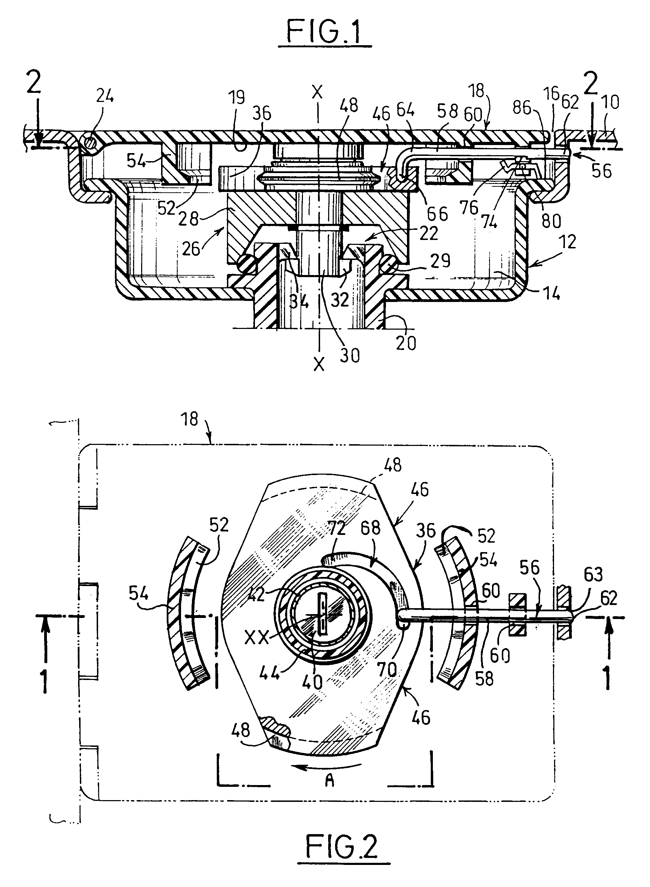

Le bouchon est pour l'essentiel constitué par un corps de bouchon 28 dont la partie inférieure coopère avec un joint d'étanchéité 29 pour obturer de manière étanche l'extrémité 22 lorsque le bouchon est dans sa position d'obturation illustrée à la figure 1.

Au centre du corps 28 du bouchon 26 est prévu un organe d'accrochage 30 dont l'extrémité inférieure comporte, selon une conception connue, des becs d'accrochage 32 diamétralement opposés qui sont prévus pour coopérer avec deux pattes d'accrochage diamétralement opposées 34 formées à l'extrémité 22 de la conduite 20 de manière à constituer un dispositif d'accrochage pour la retenue axiale du corps de bouchon 28, par rapport à l'extrémité 22 de la conduite 20, appelé dispositif "quart de tour".

L'organe d'accrochage 30 est lié en rotation au corps 28 du bouchon 26.

Le corps 28 du bouchon 26 se prolonge à sa partie supérieure par une plaque en forme de disque 36 traversée par le corps 38 d'un verrou.

Le corps du verrou 38, qui se prolonge par l'organe d'accrochage 30, est également lié en rotation au corps 28 du bouchon 26 et à la plaque intermédiaire 36.

Les éléments 28, 30, 36 et 38 constituent ainsi un ensemble solidaire en rotation et l'extrémité supérieure 40 du corps de verrou 38 est équipée d'une douille 42 qui est montée à rotation et coulissante dans un manchon de guidage 44 réalisé venu de matière avec le volet 18.

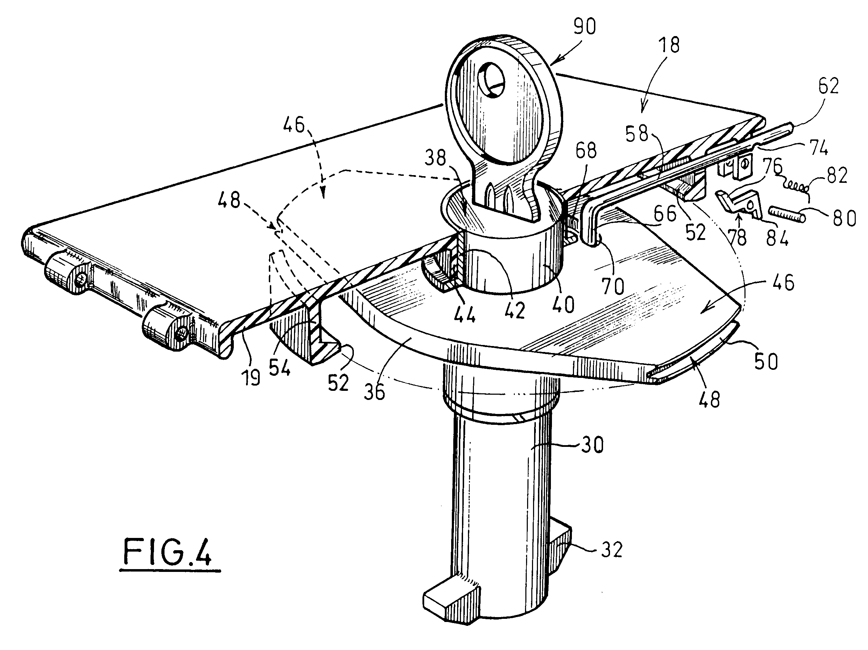

Comme on le voit sur les figures, et notamment sur la figure 4, la plaque intermédiaire 36 se prolonge par deux bras de liaison diamétralement opposés 46 dont chacun s'étend dans le plan de la plaque 36 parallèlement à la face interne 19 du volet 18.

L'extrémité libre de chaque bras 46 comporte une mortaise de contour circulaire 48 qui s'étend sur toute la largeur de l'extrémité libre 50 du bras 46.

La face interne 19 du volet 18 comporte deux tenons en arc de cercle 52 qui sont agencés de manière diamétralement opposée par rapport à l'axe du manchon de guidage 44 et dont chacun est susceptible d'être reçu dans une mortaise 48.

A cet effet, chaque tenon est réalisé venu de matière avec le couvercle 18 auquel il est relié par une patte 54 en tronçon de paroi annulaire cylindrique.

La distance diamétrale séparant les deux tenons 52 correspond bien entendu à la distance diamétrale séparant les mortaises 48 de manière que ces dernières puissent recevoir simultanément les tenons 52 lorsque le bouchon 26 occupe par rapport au volet 18 sa position angulaire d'ouverture illustrée à la figure 3.

Chaque tenon 52 s'étend également sur un arc d'angle sensiblement égal à celui sur lequel s'étend une mortaise 48.

Le volet 18 est également équipé d'un pène de verrouillage 56.

Le pène de verrouillage 56 est réalisé sous la forme d'une tige 58 qui est montée coulissante sous la face interne 19 du volet 18 à travers des orifices de guidage 60.

L'extrémité libre 62 de la tige 58 constitue le pène proprement dit et elle est susceptible d'être reçue dans une gâche 63 formée en vis-à-vis dans la carrosserie 10 de manière à verrouiller le volet 18 en position fermée comme cela est illustré aux figures 1 et 2.

Le pène 56 est susceptible de coulisser par rapport au volet 18 entre sa position de verrouillage illustrée aux figures 1 et 2 et sa position déverrouillée illustrée à la figure 3, selon une direction de coulissement concourante avec l'axe de rotation du bouchon 26, c'est-à-dire avec l'axe du manchon de guidage 44.

Afin de commander les déplacements dans les deux sens du pène 56, l'autre extrémité 64 de la tige 58 se prolonge par un doigt de commande 66 qui s'étend perpendiculairement à la direction de coulissement, en éloignement de la face interne 19 du volet 18, de manière à être reçu dans une rainure 68 formant came de commande.

La rainure 68 est formée dans la face supérieure de la plaque 36 et s'étend en partie en direction de l'un des bras 46.

Comme on peut le voir sur la figure 2, la rainure de commande 68 possède un profil incurvé qui n'est pas centré par rapport à l'axe X-X.

La rainure 58 s'étend angulairement depuis une extrémité 70, appelée extrémité de verrouillage, qui est la plus éloignée de l'axe X-X, jusqu'à une extrémité 72 de déverrouillage qui est la plus proche de l'axe X-X.

Comme on le comprend aisément en se reportant aux figures 2 et 4, la rotation, dans le sens horaire en considérant la figure 2, du bouchon 28, et donc de la plaque 36, provoque le déplacement en coulissement de la tige 58 dans le sens correspondant au rapprochement de son doigt de commande 66 vers l'axe X-X, c'est-à-dire dans le sens correspondant au dégagement de l'extrémité 62 hors de la gâche 63.

La tige 58 comporte également une encoche de blocage 74 qui est susceptible de recevoir une première extrémité 76 d'un levier de blocage 78 qui est monté pivotant sous la face inférieure 19 du couvercle 18 autour d'un axe 80.

Le levier 78 est rappelé élastiquement en rotation autour de l'axe 80 par un ressort de rappel 82 qui le sollicite dans le sens horaire en considérant les figures 1 et 4, c'est-à-dire dans le sens tendant à solliciter la première extrémité 76 du levier 78 en appui contre le corps de la tige 58.

La seconde extrémité 84 du levier 78 coopère, lorsque le volet 18 est dans sa position fermée, avec une butée de libération 86 formée dans la cavité 14 de manière que, dans cette position illustrée à la figure 1, l'extrémité 76 ne puisse pas pénétrer dans l'encoche 74.

Au contraire, lorsque le volet 18 est en position ouverte, le levier 78 est sollicité en rotation par le ressort et sa première extrémité 76 est libre de pénétrer dans l'encoche de blocage 74 lorsque ces deux éléments sont en vis-à-vis l'un de l'autre.

Lorsque l'extrémité 76 est dans l'encoche 74, comme cela est illustré à la figure 3, le pène 56 de verrouillage est bloqué en translation et, du fait de la coopération du doigt de commande 66 avec la rainure formant came 68, l'ensemble constitué par le bouchon 26, la plaque 36 et le verrou 38 ne peut plus tourner autour de l'axe X-X par rapport au volet 18.

On décrira maintenant le fonctionnement de l'agencement illustré sur les figures.

Dans la position fermée et verrouillée illustrée à la figure 1, le bouchon 26 est dans sa position d'obturation et il est immobilisé axialement par rapport à l'extrémité 22 de la tubulure de remplissage 20.

L'ensemble constitué par le bouchon 26, la plaque 36 et le verrou 38 n'est pas relié au volet 18 car les tenons 52 sont situés hors des mortaises 48 comme cela apparaît clairement à la figure 2.

En cas de choc provoquant un arrachement du volet 18, ou en cas de tentative d'ouverture par effraction de ce dernier, le volet 18 peut être arraché mais le bouchon 26 demeure dans sa position d'obturation accroché sur l'extrémité 22 de la tubulure de remplissage 20.

Lorsque le conducteur désire procéder au remplissage du réservoir, il introduit une clé 90 dans le verrou 38 et il provoque la rotation, dans le sens horaire indiqué par la flèche A de la figure 2, de l'ensemble constitué par le bouchon 26, la plaque 36, les bras 46 et le corps du verrou d'un quart de tour par rapport à l'extrémité 22 de la tubulure 20 et par rapport au volet 18.

Cette rotation a pour effet de provoquer d'une part la venue du bouchon 26 dans sa position d'ouverture dans laquelle les becs 32 ne sont plus en regard des pattes 34 et dans laquelle il peut donc être extrait axialement par rapport à l'extrémité 22 et, d'autre part, la venue en prise des tenons 52 avec les mortaises 48 de manière à lier ensemble la plaque 36 et le volet 38 et donc le bouchon 26 et le volet 38.

Cette rotation provoque également simultanément le déverrouillage du pène 56, du fait de la coopération du doigt 66 avec la rainure 68.

Après cette rotation d'un quart de tour, le conducteur peut donc provoquer le pivotement de l'ensemble constitué par le volet 18 et le bouchon 26, autour de l'axe 24, dans le sens anti-horaire en considérant la figure 1, pour l'amener dans la position illustrée à la figure 3 dans laquelle l'accès à l'extrémité 22 de la tubulure 20 est dégagée.

Dès que le volet 18 s'éloigne de la cavité 14, l'extrémité 74 du levier de blocage 78 pénètre dans l'encoche de blocage 74 de la tige 58 et il n'est alors plus possible, comme cela a été expliqué précédemment, de provoquer une rotation relative du bouchon 26 par rapport au volet 18. Il est donc ainsi impossible que le conducteur provoque accidentellement la désolidarisation du bouchon 26 par rapport au volet 18 en tentant de faire tourner l'ensemble au moyen de la clé 90.

A l'issue du remplissage, le conducteur provoque le pivotement en sens inverse du volet 18, c'est-à-dire dans le sens horaire en considérant la figure 3, jusqu'à ce que le corps 28 du bouchon 26 vienne à nouveau en appui sur le joint 29, la seconde extrémité 84 du levier de blocage 78 venant alors en contact avec la butée de libération 86.

Le conducteur peut alors provoquer la rotation de l'ensemble du bouchon 26 d'un quart de tour, dans le sens anti-horaire en considérant la figure 2, pour ramener le bouchon dans sa position d'obturation illustrée aux figures 1 et 2 en provoquant simultanément la désolidarisation du bouchon 26 par rapport au volet 18, l'accrochage du bouchon sur l'extrémité 22, et le verrouillage du volet 18 en position fermée au moyen du pène 56 qui est entraîné en coulissement par la coopération du doigt 66 avec la rainure 68.

L'invention n'est pas limitée au mode de réalisation qui vient d'être décrit.

Il est par exemple possible de concevoir des moyens débrayables de liaison mécanique entre le bouchon 26 et le volet 18 autres que les moyens par coopération de formes 48 et 52 qui sont illustrés sur les figures.

De même, les moyens de commande du pène de verrouillage 56 et les moyens de blocage de ce dernier peuvent revêtir d'autres formes de conception, mais l'agencement selon l'invention est particulièrement avantageux dans la mesure où l'ensemble des opérations est commandé au moyen d'un seul organe de commande rotatif constitué par le verrou 38 sur lequel le conducteur agit au moyen de la clé 90.

## Revendications

1. Agencement pour l'obturation de la canalisation de remplissage (20) d'un réservoir de véhicule automobile dont l'extrémité (22) est agencée dans une cavité (14) de la carrosserie (10), du type comportant un volet (18) qui est monté mobile entre une position ouverte dégageant l'accès à l'extrémité (22) de la conduite de remplissage (20) et une position fermée dans laquelle le volet masque la face ouverte (16) de la cavité (14), qui porte sur sa face interne un bouchon (26) d'obturation de l'extrémité (22) de la conduite de remplissage (20), et qui comporte des moyens (56) de verrouillage en position fermée du volet (18), caractérisé en ce qu'il comporte des moyens débrayables (48, 52) de liaison du bouchon (26) avec le volet (18) qui sont désaccouplés lorsque le volet (18) est en position fermée et verrouillée et dont l'accouplement est commandé par le verrouillage du volet (18).

2. Agencement selon la revendication 1, caractérisé en ce que le bouchon (26) est monté mobile en rotation par rapport au volet (18) entre une position d'obturation de l'extrémité (22) de la conduite et une position d'ouverture, la rotation du bouchon (26) étant commandée par l'actionnement desdits moyens de verrouillage, et en ce que les moyens débrayables de liaison du bouchon (26) avec le volet (18) sont des moyens de liaison par coopération de formes (48, 52) qui sont désaccouplés lorsque le bouchon (26) est en position d'obturation et qui sont accouplés lorsque le bouchon (26) est en position d'ouverture.

3. Agencement selon la revendication 2, caractérisé en ce que les moyens de verrouillage comportent un organe rotatif de commande (38) qui est lié en rotation au corps (26) du bouchon, qui commande les déplacements d'un organe de verrouillage (56) du volet (18) monté mobile par rapport à ce dernier, et dont une extrémité (40) passe à travers le volet (18) pour être accessible depuis la face externe du volet.

4. Agencement selon la revendication 3, caractérisé en ce que l'organe rotatif de commande est un verrou de commande (38).

5. Agencement selon l'une des revendications 3 ou 4, caractérisé en ce que ladite extrémité (40) de l'organe rotatif de commande (38) est montée à rotation et coulissante dans un manchon de guidage (44) formé dans le volet (18).

6. Agencement selon l'une quelconque des revendications 3 à 5, caractérisé en ce que les moyens de liaison par coopération de formes comportent au moins un bras radial (46) de liaison lié en rotation audit organe rotatif de commande (38) par rapport auquel il s'étend radialement et dont l'extrémité (48) est susceptible de coopérer avec une partie (52) formée sur le volet (18), lorsque le bouchon (26) occupe sa position d'ouverture.

7. Agencement selon la revendication 6, caractérisé en ce que l'extrémité du bras comporte une mortaise circulaire (48) qui est susceptible de recevoir un tenon complémentaire (52) formé sur la face interne (19) du volet (18).

8. Agencement selon la revendication 7, caractérisé en ce que les moyens de liaison comportent deux bras radiaux (46) diamétralement opposés, et en ce que la face interne (19) du volet comporte deux tenons (52) diamétralement opposés.

9. Agencement selon l'une quelconque des revendications 3 à 8, caractérisé en ce que ledit organe de verrouillage est un pène de verrouillage (56) qui est monté mobile en translation sur le volet (18), selon une direction sensiblement parallèle au plan du volet, entre une position de verrouillage dans laquelle il est reçu dans une gâche (63) formée dans la cavité (14) et une position de déverrouillage du volet.

10. Agencement selon la revendication 9, caractérisé en ce que le pène (56, 62) comporte un doigt de commande (66) qui est reçu dans une rainure (68) formant came de commande agencée dans un élément (36, 46) lié en rotation audit organe rotatif de commande (38).

11. Agencement selon la revendication 10 prise en combinaison avec l'une quelconque des revendications 6 à 8, caractérisé en ce que la rainure (68) est formée dans une face d'un bras de liaison (46) tournée vers le volet (18).

12. Agencement selon l'une quelconque des revendications 3 à 11, caractérisé en ce qu'il comporte des moyens de blocage (78, 74) en position accouplée des moyens débrayables de liaison (48, 52), lorsque le volet (18) est en position ouverte.

13. Agencement selon la revendication 12 prise en combinaison avec l'une des revendications 10 ou 11, caractérisé en ce que les moyens de blocage comportent un organe de blocage (78) qui coopère avec le pène de verrouillage (56, 74) pour bloquer ce dernier en position déverrouillée lorsque le volet est ouvert.

14. Agencement selon la revendication 13, caractérisé en ce que l'organe de blocage est un levier de blocage (78) dont une première extrémité (76) est sollicitée élastiquement (82) en direction d'une encoche de blocage (74) formée dans le corps (58) du pène de verrouillage (56, 62) et dans laquelle elle (76) est reçue lorsque ce dernier (56) est en position déverrouillée, et dont la seconde extrémité (84) est susceptible de coopérer avec une butée de libération (86) formée dans la cavité (14), lorsque le volet (18) est en position fermée, pour provoquer l'échappement de la première extrémité (76) hors de l'encoche de blocage (74), à l'encontre de l'effort élastique de rappel (82).

15. Agencement selon la revendication 2, caractérisé en ce que le bouchon (26) comporte des moyens d'accrochage (30, 32) qui coopèrent avec des moyens complémentaires (34) agencés à l'extrémité (22) de la conduite de remplissage (20) pour immobiliser axialement le bouchon (26) par rapport à la conduite (20) lorsqu'il occupe sa position d'obturation.

16. Agencement selon l'une quelconque des revendications précédentes, caractérisé en ce que le volet (18) est monté articulé sur la carrosserie autour d'un axe de pivotement (54) sensiblement parallèle au plan du volet.

## Claims

1. Arrangement for closing off the filler pipe (20) of a motor vehicle tank whose end (22) is arranged in a cavity (14) in the bodywork (10), of the type having a flap (18) which is mounted so as to move between an open position leaving clear the access to the end (22) of the filler pipe (20) and a closed position in which the flap conceals the open face (16) of the cavity (14), which carries on its internal face a plug (26) for closing off the end (22) of the filler pipe (20), and which has means (56) for locking the flap (18) in the closed position, characterised in that it includes disengageable means (48, 52) for connecting the plug (26) with the flap (18) which are uncoupled when the flap (18) is in the closed position and locked and whose coupling is controlled by the locking of the flap (18).

2. Arrangement according to Claim 1, characterised in that the plug (26) is mounted so as to be movable in rotation with respect to the flap (18) between a position closing off the end (22) of the pipe and an open position, the rotation of the plug (26) being controlled by the actuation of the said locking means, and in that the disconnectable means for connecting the plug (26) with the flap (18) are means of connection by cooperation of shapes (48, 52) which are uncoupled when the plug (26) is in the closing-off position and which are coupled when the plug (26) is in the open position.

3. Arrangement according to Claim 2, characterised in that the locking means include a rotary control member (38) which is connected with respect to rotation to the body (26) of the plug, which controls the movements of a locking member (56) for the flap (18) mounted so as to move with respect to the latter, and one end (40) of which passes through the flap (18) so as to be accessible from the external face of the flap.

4. Arrangement according to Claim 3, characterised in that the rotary control member is a control bolt (38).

5. Arrangement according to one of Claims 3 or 4, characterised in that the said end (40) of the rotary control member (38) is rotationally and slidably mounted in a guide sleeve (44) formed in the flap (18).

6. Arrangement according to any one of Claims 3 to 5, characterised in that the means of connection by cooperation of shapes include at least one radial connection arm (46) connected with respect to rotation to the said rotary control member (38) with respect to which it extends radially and whose end (48) is able to cooperate with a part (52) formed on the flap (18), when the plug (26) is occupying its open position.

7. Arrangement according to Claim 6, characterised in that the end of the arm has a circular mortice (48) which is able to receive a complementary tenon (52) formed on the internal face (19) of the flap (18).

8. Arrangement according to Claim 7, characterised in that the connection means include two diametrically opposite radial arms (46), and in that the internal face (19) of the flap has two diametrically opposite tenons (52).

9. Arrangement according to any one of Claims 3 to 8, characterised in that the said locking member is a locking latch (56) which is mounted so as to move in translation on the flap (18), in a direction substantially parallel to the plane of the flap, between a locking position in which it is received in a keeper (63) formed in the cavity (14) and a position of unlocking of the flap.

10. Arrangement according to Claim 9, characterised in that the latch (56, 62) has a control pin (66) which is received in a groove (68) forming a control cam arranged in an element (36, 46) connected with respect to rotation to the said rotary control member (38).

11. Arrangement according to Claim 10 taken in combination with any one of Claims 6 to 8, characterised in that the groove (68) is formed in one face of a connecting arm (46) turned towards the flap (18).

12. Arrangement according to any one of Claims 3 to 11, characterised in that it includes means of immobilisation (78, 74) in the coupled position of the disconnectable connection means (48, 52), when the flap (18) is in the open position.

13. Arrangement according to Claim 12 taken in combination with one of Claims 10 or 11, characterised in that the immobilisation means include an immobilisation member (78) which cooperates with the locking latch (56, 74) in order to immobilise the latter in the unlocked position when the flap is open.

14. Arrangement according to Claim 13, characterised in that the immobilisation member is an immobilisation lever (78), a first end (76) of which is forced elastically (82) in the direction of an immobilisation recess (74) formed in the body (58) of the locking latch (56, 62) and in which it (76) is received when the latter (56) is in the unlocked position, and the second end (84) of which is able to cooperate with a release stop (86) formed in the cavity (14), when the flap (18) is in the closed position, in order to bring about the escape of the first end (76) out of the immobilisation recess (74), counter to the elastic return force (82).

15. Arrangement according to Claim 2, characterised in that the plug (26) includes hooking means (30, 32) which cooperate with complementary means (34) arranged at the end (22) of the filler pipe (20) in order to immobilise the plug (26) axially with respect to the pipe (20) when it is occupying its closing-off position.

16. Arrangement according to any one of the preceding claims, characterised in that the flap (18) is mounted articulated on the bodywork about a pivot axis (54) substantially parallel to the plane of the flap.

## Patentansprüche

1. Anordnung für den Verschluß des Einfüllstutzens (20) eines Kraftfahrzeugtanks, dessen Ende (22) in einer Austiefung (14) der Karosserie (10) angeordnet ist, in der Ausführung mit einer Klappe (18), die beweglich zwischen einer geöffneten Position, welche den Zugang zum Ende (22) des Einfüllstutzens (20) freigibt, und einer geschlossenen Position angebracht ist, in der die Klappe die offene Seite (16) der Austiefung (14) abdeckt, die auf ihrer Innenseite einen Verschlußdeckel (26) für das Ende (22) des Einfüllstutzens (20) trägt und die Mittel (56) zur Verriegelung der Klappe (18) in geschlossener Position umfaßt, **dadurch gekennzeichnet**, daß sie ausrückbare Mittel (48, 52) für eine Verbindung des Verschlußdeckels (26) mit der Klappe (18) umfaßt, die getrennt werden, wenn sich die Klappe (18) in geschlossener und verriegelter Position befindet, und deren Zusammenfügung durch die Entriegelung der Klappe (18) herbeigeführt wird.

2. Anordnung nach Anspruch 1, **dadurch gekennzeichnet,** daß der Deckel (26) im Verhältnis zur Klappe (18) drehbeweglich zwischen einer Position mit Verschluß des Endes (22) des Einfüllstutzens und einer geöffneten Position gelagert ist, wobei die Drehung des Deckels (26) durch die Betätigung der besagten Verriegelungsmittel herbeigeführt wird, und daß die ausrückbaren Mittel für die Verbindung des Deckels (26) mit der Klappe (18) formschlüssig zusammenwirkende Verbindungsmittel (48, 52) sind, die getrennt werden, wenn sich der Deckel (26) in Verschlußposition befindet, und die zusammengefügt werden, wenn sich der Deckel (26) in geöffneter Position befindet.

3. Anordnung nach Anspruch 2, **dadurch gekennzeichnet,** daß die Verriegelungsmittel ein drehbares Betätigungsorgan (38) umfassen, das drehfest mit dem Körper (26) des Deckels verbunden ist, das die Verschiebung eines beweglich im Verhältnis zur Klappe gelagerten Verriegelungsorgans (56) der Klappe (18) herbeiführt und das mit einem Ende (40) durch die Klappe (18) hindurchgeht, so daß es von der Außenseite der Klappe aus zugänglich ist.

4. Anordnung nach Anspruch 3, **dadurch gekennzeichnet**, daß das drehbare Betätigungsorgan ein Betätigungsschloß (38) ist.

5. Anordnung nach einem der Ansprüche 3 oder 4, **dadurch gekennzeichnet,** daß das besagte Ende (40) des drehbaren Betätigungsorgans (38) drehbar und verschiebbar in einer Führungsmuffe (44) gelagert ist, die in der Klappe (18) ausgebildet ist.

6. Anordnung nach einem der Ansprüche 3 bis 5, **dadurch gekennzeichnet,** daß die formschlüssig zusammenwirkenden Verbindungsmittel wenigstens einen radialen Verbindungsarm (46) umfassen, der drehfest mit dem besagten drehbaren Betätigungsorgan (38) verbunden ist, im Verhältnis zu dem er sich radial erstreckt und dessen Ende (48) mit einem an der Klappe (18) ausgebildeten Teil (52) zusammenwirken kann, wenn der Deckel (26) seine geöffnete Position einnimmt.

7. Anordnung nach Anspruch 6, **dadurch gekennzeichnet**, daß das Ende des Arms ein kreisförmiges Zapfenloch (48) enthält, in das ein formschlüssiger Zapfen (52) eingesetzt werden kann, der an der Innenseite (19) der Klappe (18) ausgebildet ist.

8. Anordnung nach Anspruch 7, **dadurch gekennzeichnet**, daß die Verbindungsmittel zwei diametral gegenüberliegende radiale Arme (46) umfassen und daß die Innenseite (19) der Klappe zwei diametral gegenüberliegende formschlüssige Zapfen (52) umfaßt.

9. Anordnung nach einem der Ansprüche 3 bis 8, **dadurch gekennzeichnet,** daß das Verriegelungsorgan ein Schloßriegel (56) ist, der an der Klappe (18) geradlinig beweglich in einer zur Ebene der Klappe parallelen Richtung zwischen einer Verriegelungsposition, in der er in einem in der Austiefung (14) ausgebildeten Schließkeil (63) aufgenommen ist, und einer Entriegelungsposition der Klappe gelagert ist.

10. Anordnung nach Anspruch 9, **dadurch gekennzeichnet**, daß der Schloßriegel (56, 62) einen Betätigungsfinger (66) umfaßt, der in eine Nut (68) eingesetzt ist, die einen Betätigungsnocken bildet, der in einem drehfest mit dem drehbaren Betätigungsorgan (38) verbundenen Element (36, 46) angeordnet ist.

11. Anordnung nach Anspruch 10 in Kombination mit einem der Ansprüche 6 bis 8, **dadurch gekennzeichnet**, daß die Nut (68) in eine zur Klappe (18) gerichtete Seite eines Verbindungsarms (46) eingearbeitet ist.

12. Anordnung nach einem der Ansprüche 3 bis 11, **dadurch gekennzeichnet,** daß sie Sperrmittel (78, 74) umfaßt, die in zusammengefügter Position der ausrückbaren Verbindungsmittel (48, 52) wirksam werden, wenn sich die Klappe (18) in geöffneter Position befindet.

13. Anordnung nach Anspruch 12 in Kombination mit einem der Ansprüche 10 oder 11, **dadurch gekennzeichnet**, daß die Sperrmittel ein Sperrorgan (78) umfassen, das mit dem Schloßriegel (56, 74) zusammenwirkt, um diesen in Verriegelungsposition zu sichern, wenn die Klappe geöffnet ist.

14. Anordnung nach Anspruch 13, **dadurch gekennzeichnet**, daß das Sperrorgan ein Sperrhebel (78) ist, dessen erstes Ende (76) elastisch (82) in Richtung einer Sperrausklinkung (74) beaufschlagt wird, die in den Körper (58) des Schloßriegels (56, 62) eingearbeitet ist und in die es (76) eingreift, wenn sich der Schloßriegel (56) in entriegelter Position befindet, und dessen zweites Ende (84) mit einem in der Austiefung (14) ausgebildeten Freigabeanschlag (86) zusammenwirken kann, wenn sich die Klappe (18) in geschlossener Position befindet, um das Heraustreten des ersten Endes (76) aus der Sperrausklinkung (74) entgegen der elastischen Rückstellkraft (82) zu bewirken.

15. Anordnung nach Anspruch 2, **dadurch gekennzeichnet,** daß der Deckel (26) Eingriffsmittel (30, 32) umfaßt, die mit formschlüssigen Mitteln (34) zusammenwirken, die am Ende (22) des Einfüllstutzens (20) angeordnet sind, um den Deckel (26) axial im Verhältnis zum Einfüllstutzen (20) zu sichern, wenn er seine Verschlußposition einnimmt.

16. Anordnung nach einem der vorangehenden Ansprüche, **dadurch gekennzeichnet**, daß die Klappe (18) an der Karosserie schwenkbar um eine Schwenkachse (54) angebracht ist, die in etwa parallel zur Ebene der Klappe verläuft.
